# EUROPEAN PATENT APPLICATION

(11) **EP 4 574 866 A1**
(43) Date of publication of application: **25.06.2025**
(21) Application number: 23218850.8
(22) Date of filing: 20.12.2023
(51) Int. Cl.: C08G 18/10, C08G 18/12, C08G 18/38, C08G 18/79, C09D 175/12

(54) **COATING SYSTEM HAVING HIGH SURFACE ROUGHNESS**

(71) Applicant: Sika Technology AG, 6340 Baar (CH)
(72) Inventor: Turner, Jeff, Maplewood, 07040 (US); Hinzpeter, Claudia, Norwood, 07648 (US)
(74) Representative: Sika Patent Attorneys

(57) **Abstract**

Described is a composition comprising a first component A comprising at least one polyaspartic ester P1 and a second component B comprising an aliphatic polyisocyanate B1, an isocyanate prepolymer B2 and an isocyanate-functional polyurethane polymer B3, wherein the weight ratio B1/B2/B3 is in the range of 1-4 : 1-4 : 5. The composition is notable for providing a floor coating system, especially for carpark floors, which cures below 4 °C, preferably below -10 °C, and ensures sufficient applicability and long open time to be roller applied.

## Description

### Technical field

The invention relates to floor coating systems featuring long open time and good applicability, especially for producing industrial floors or carpark floors.

### Prior art

For floor covering systems, especially for trafficable floors such as industrial floors, bridges, and floors in carparks, there exists a sometimes-diverse profile of requirements, especially in relation to flexibility in conjunction with high abrasion resistance and chemical resistance.

Polyurethane coatings are generally used as topcoats in carpark application for waterproofing. Generally, polyurethane coatings cure down to 4 °C but not lower. Polyaspartic and polyurethane/polyurea hybrid systems however will cure even below freezing temperatures with the disadvantage that they typically have a short pot life. This makes their application difficult especially if these systems are roller applied. polyurethane/polyurea hybrid systems also have higher viscosity at high solids which makes rolling them onto cold substrates challenging. Alternatively, there are spray applied polyurea systems which cure at cold temperatures but the drawback being the need for spray applying and also conditioning material at higher temperature to facilitate the ease of spraying.

### Summary of the invention

The object of the invention, accordingly, was that of overcoming the above-discussed problems of the prior art, especially to provide a floor coating system which cures below 4 °C, preferably below -10 °C, and ensures sufficient applicability, low viscosity and long open time to be roller applied.

Surprisingly it would be possible to achieve this object through the provision of a coating system as claimed in the first main claim.

Preferred embodiments of the composition are reproduced in the dependent claims. The invention is elucidated below comprehensively.

### A way of performing the invention

The invention relates to a composition comprising:
a **first component** comprising:
- at least one polyaspartic ester **P1** of the formula (I)

| | |
|---|---|
| 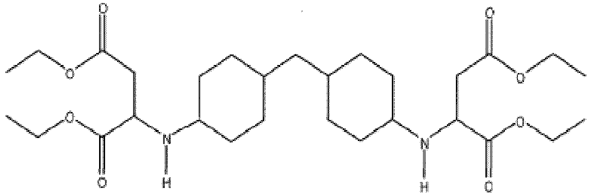 | (I) |

or formula (III)

| | |
|---|---|
| 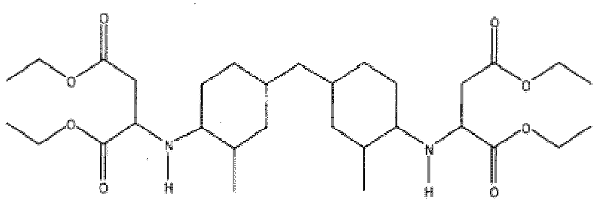 | (II) |

and a **second component** comprising:
- at least one aliphatic polyisocyanate **B1**;
- at least one isocyanate prepolymer **B2**;
- at least one isocyanate-functional polymer **B3**.

The weight ratio **B1/B2/B3** is in the range of 1-4 : 1-4 : 5, preferably 2-3.5 : 1.5-3 : 5, more preferably 3-3.5 : 1.5-2 : 5.

A "primary hydroxyl group" refers to an OH group bonded to a carbon atom having two hydrogens.

A "primary amino group" refers to an NH₂ group bonded to one organic radical, and a "secondary amino group" refers to an NH group bonded to two organic radicals which may also together be part of a ring.

In the present document, "molecular weight" is understood to mean the molar mass (in grams per mole) of a molecule. "Average molecular weight" is understood to mean the number average Mₙ of an oligomeric or polymeric mixture of molecules, which is typically determined by means of gel permeation chromatography (GPC) against polystyrene as standard.

A substance or composition is referred to as "storage-stable" or "storable" when it can be stored at room temperature in a suitable container over a prolonged period, typically over at least 3 months to up to 6 months or more, without any change in its application or use properties to a degree of relevance for the use thereof as a result of the storage.

"Room temperature" refers to a temperature of 23°C.

The first component **A** comprises at least one polyaspartic ester **P1** of the formula (I)

| | |
|---|---|
| 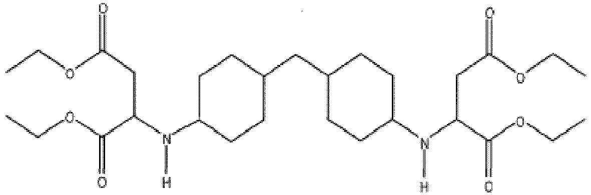 | (I) |

or of formula (II)

| | |
|---|---|
| 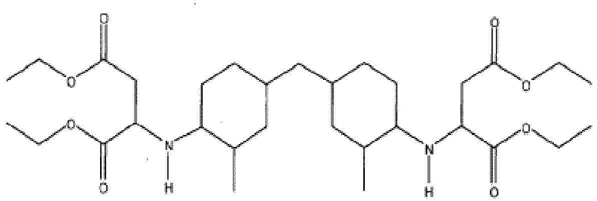 | (II) |

A suitable polyaspartic ester P1 of formula (I) is commercially available from Bayer Materials Science under the Desmophen NH1423 trade names. A suitable polyaspartic ester **P1** of formula (II) is commercially available from Bayer Materials Science under the Desmophen NH1520 trade names. Preferably, the polyaspartic ester P1 is one of formula (I).

Preferably, the polyaspartic ester **P1** has an equivalent weight of 220-300, in particular 250-300, more preferably 270-295.

It is further preferable when the polyaspartic ester **P1** has a viscosity at 25°C of 500-3000 mPas, 600-2500 mPas, in particular 700-2200 mPas, according to DIN 53 019, especially measured with a Physica MCR 301 plate-plate rheometer with a measurement gap of 0.5 mm according to DIN 53 019-1.

The polyaspartic ester **P1** preferably has an amine value of 160-300, in particular 170-300, more preferably 180-205.

It may further be advantageous when the at least one polyaspartic ester **P1** contains more than 80% by weight, preferably more than 90% by weight, in particular more than 95% by weight, especially preferably more than 98% by weight, most preferably more than 99% by weight, of the NCO-reactive groups, especially the amino groups, of the first component, based on the total weight of the first component.

The second component of the composition comprises an aliphatic polyisocyanate **B1**.

An "aliphatic isocyanate" refers to an isocyanate wherein the isocyanate groups are bonded directly to an aliphatic carbon atom. Accordingly, isocyanate groups of this kind are referred to as "aliphatic isocyanate groups".

Suitable aliphatic polyisocyanates **B1** are in particular monomeric di- or triisocyanates and also oligomers, polymers, and derivatives of monomeric di- or triisocyanates, and any desired mixtures thereof.

Preferred aliphatic monomeric polyisocyanates **B1** are aliphatic or cycloaliphatic diisocyanates, especially HDI, TMDI, cyclohexane 1,3-diisocyanate or 1,4-diisocyanate, IPDI, H₁₂MDI, 1,3- or 1,4-bis(isocyanatomethyl)cyclohexane.

A particularly preferred monomeric polyisocyanate **B1** is HDI, IPDI or H₁₂MDI. Most preferred is HDI or IPDI, especially HDI.

Suitable oligomers, polymers, and derivatives of the monomeric di- and triisocyanates mentioned are especially those derived from HDI or IPDI, especially HDI. Among these, commercially available products are especially suitable, for example Desmodur^{®} N 75, Desmodur^{®} N 3600, and Desmodur^{®} N 3900 (all from Bayer).

They preferably have an NCO content of 16% to 25% by weight, preferably 20% to 25% by weight.

They preferably have a viscosity at 23°C of 500-2000 mPa s, preferably 700-1500 mPa·s, especially 1000-1500 mPa s, to DIN EN ISO 3219/A.3.

Particularly preferred aliphatic polyisocyanates **B1** are oligomers, polymers, and derivatives derived from HDI or IPDI, especially HDI. They preferably have an NCO content of 16% to 25% by weight, especially 20% to 25% by weight.

The second component of the composition additionally contains at least one isocyanate prepolymer **B2,** preferably having an isocyanate group equivalent of 300 to 1100. An isocyanate group equivalent of less than 300 is disadvantageous in that low values of tensile strength and elongation at break are obtained as a result.

The isocyanate prepolymer **B2** has an isocyanate group (NCO) functionality of preferably 1.9 to 4.5, preferably 1.9 to 3.5, more preferably 1.9 to 2.5. An isocyanate group equivalent of more than 4.5, or 3.5, or 2.5, is disadvantageous in that lower values of tensile strength and elongation at break are obtained as a result.

The isocyanate prepolymer **B2** preferably has an isocyanate group (NCO) content of 1% to 40% by weight, more preferably 5% to 20% by weight and most preferably 5% to 15% by weight, based on the total weight of the isocyanate prepolymer **B2**.

The isocyanate prepolymer **B2** preferably has a viscosity of 1000 to 10 000 mPa s, more preferably 1000 to 5000 mPa s, most preferably 1000 to 2500 mPa s.

The isocyanate prepolymer **B2** is preferably the reaction product of an aliphatic isocyanate monomer and/or an aliphatic isocyanate oligomer with a polyol. Compared to a reaction product with a monoalcohol, one reason why this is advantageous is that higher values for tensile strength and elongation at break are obtained as a result. Reaction products with a monoalcohol are typically used as crosslinkers, for example allophanate group-containing reaction products of HDI and/or HDI isocyanurates with monoalcohols.

Such monoalcohols are typically linear, branched or cyclic monoalcohols containing 1 to 12 carbon atoms. One example of such a reaction product with a monoalcohol is Desmodur^{®} XP 2763 from Covestro Co., Ltd.

The reaction for preparation of the isocyanate prepolymer **B2** has an NCO/OH molar ratio of preferably 1.1:1 to 40:1 and most preferably 2:1 to 25:1. The excess isocyanate monomers that remain in the reaction for preparation of the isocyanate prepolymer can be removed by distillation in order to obtain a prepolymer without monomer.

The aliphatic isocyanate is preferably selected from the list consisting of hexamethylene diisocyanate (HDI), 2,2-dimethylpentane diisocyanate, 2,2,4-trimethylhexane diisocyanate, butene diisocyanate, 1,3-butadiene 1,4-diisocyanate, 2 4,4-trimethylhexane 1,6-diisocyanate, bis(isocyanatoethyl) carbonate, bis(isocyanatoethyl) ether and lysine methyl ester diisocyanate, most preferably hexamethylene diisocyanate.

The polyol is preferably one or more selected from the list consisting of polyether polyol, polyester polyol and polycarbonate polyol, more preferably a polyether polyol and/or a polyester polyol.

One reason why this is advantageous is that higher values for tensile strength and elongation at break are obtained as a result. The polyol has an average molecular weight of preferably more than 300 g/mol, more preferably more than 500 g/mol and most preferably 500 to 8000 g/mol. The polyol contains preferably 2 to 6 functional hydroxyl groups and most preferably 2 to 3 functional hydroxyl groups.

The isocyanate prepolymer **B2** preferably comprises one or more of the following groups: a carbamate group and an allophanate group.

The second component **B** comprises at least one isocyanate-functional polyurethane polymer **B3**.

The average molecular weight of polyurethane polymer **B3** is preferably in the range from 1000 to 20 000 g/mol, more preferably in the range from 2000 to 10 000 g/mol.

The average NCO functionality of polyurethane polymer **B3** is preferably in the range from 1.7 to 3, especially from 1.8 to 2.5. The average NCO functionality of polyurethane polymer **B3** is more preferably in the range from 2.05 to 2.5.

The free isocyanate group content of polyurethane polymer **B3** is preferably in the range from 1 to 10 wt%, more preferably in the range from 1 to 5 wt%.

A suitable isocyanate-functional polyurethane polymer **B3** is obtainable from the reaction of at least one polyisocyanate with at least one polyol. This reaction may be effected by reacting the polyol and the polyisocyanate using customary processes, for example at temperatures of 50°C to 100°C with or without suitable catalysts, while the polyisocyanate has been dosed such that its isocyanate groups are present in a stoichiometric excess relative to the hydroxyl groups of the polyol. The polyisocyanate will advantageously have been dosed such that an NCO/OH ratio of 1.3 to 5, especially one of 1.5 to 3 is maintained. By "NCO/OH ratio" is meant the ratio of the number of isocyanate groups used to the number of hydroxyl groups used. After all the hydroxyl groups of the polyol have been converted, the polyurethane polymer **B3** is preferably left with a free isocyanate group content of 1 to 10 wt%, more preferably of 1 to 5 wt%.

The polyisocyanate used for preparing a polyurethane polymer **B3** is preferably a polyisocyanate as described as preferred for the aliphatic polyisocyanate **B1**. Most preferably, the polyisocyanate used for the preparation of the polyurethane polymer **B3** is selected from the group of monomeric di- or triisocyanates and also oligomers, polymers, and derivatives of monomeric di- or triisocyanates of HDI, IPDI or H₁₂MDI, most preferred HDI or IPDI, especially IPDI.

The polyol used for preparing a polyurethane polymer **B3** is preferably selected from the list consisting of polyoxyalkylene polyol, polyester polyol, polycarbonate polyol, polyacrylate polyol and diol chain extender. Particular preference is given to polycarbonate polyols, polyoxyalkylene polyols, especially polyoxybutylene polyols, polyoxypropylene polyols and mixed polyoxyethylene-polyoxypropylene polyols and diol chain extender.

The diol chain extender is preferably an aliphatic or cycloaliphatic diol having a molecular weight in the range from 60 to 200 g/mol. Preferably the diol chain extender contains at least one primary hydroxyl group, more preferably two primary hydroxyl group. Most preferably the diol chain extender is 1,4 butanediol.

Most preferably, the polyols used for preparing the polyurethane polymer **B3** are a mixture of at least one diol chain extender, especially 1,4 butanediol, and polyoxyalkylene polyols.

It is especially preferred it more than 70 wt.-%, more than 80 wt.-%, more than 90 wt.-%, especially more than 95 wt.-% of the polyols used are selected from the list consisting of at least one diol chain extender and polyoxyalkylene polyols, especially a mixture thereof. Preferably the weight ratio between the polyoxyalkylene polyols and the at least one diol chain extender is from 40:1 to 80:1, preferably 50:1 to 70:1, more preferably 55:1 to 60:1.

The average molecular weight of the polyol for preparing a polyurethane polymer **B3**, not including the diol chain extender, is preferably 500-20 000 g/mol, especially in the range from 1000 to 8000 g/mol.

The polyol for preparing a polyurethane polymer **B3** is preferably a diol or a mixture between at least one diol and at least one triol, especially a mixture between at least one diol and at least one triol.

It may further be advantageous when the sum of the aliphatic polyisocyanate **B1,** the isocyanate prepolymer **B2** and the isocyanate-functional polyurethane polymer **B3 (B1+B2+B3)** comprises more than 80 mol%, more than 90 mol%, more than 95 mol%, especially more than 98 mol%, more preferably more than 99 mol%, of all the isocyanate groups of the second component **B.**

The weight ratio of **B1/B2/B3** is in the range of 1-4 : 1-4 : 5. It can be seen from table 1 in the comparison of E1 with Ref.1 - Ref.4 that said ranges leads to a sufficiently low viscosity and sufficiently long gel time for application by roller.

Preferably, the weight ratio **B1/B2/B3** is in the range of 2-3.5 : 1.5-3 : 5, more preferably 3-3.5 : 1.5-2 : 5. Said preferred ranges are advantageous with respect to low viscosity values in combination with a longer gel time. This can be seen in the comparison of E2 with E1.

The composition preferably further comprises at least one aggregate **AG**, preferably selected from the group consisting of inorganic aggregates **AG1** and aggregates **AG2** of an at 23°C solid thermoset, preferably aggregates **AG2** of an at 23°C solid thermoset. Said aggregates **AG2** are advantageous with respect to a stronger connection to the cured composition. Preferably, the at least one aggregate **AG** is part of the first component **A.**

Preferably the amount of aggregate **AG** is 5-30 wt.-%, preferably 7.5 - 25 wt.-%, 10 - 20 wt.-%, more preferably 12.5 - 17.5 wt.-%, based on the total weight of the composition.

In this document, the term "construction aggregate", or simply "aggregate", is preferably understood as coarse- to medium-grained particulate material used in construction.

In this document, the term "particle size" is preferably understood as the "mean particle size". The term "mean particle size" refers here preferably to the D50 value of the cumulative volume distribution curve, at which 50 vol% of the particles have a diameter which is smaller than the value. The mean particle size or the D50 value is determined preferably by laser diffractometry.

Preferably the aggregate **AG** has a particle size of 500 - 5000 microns, more preferably 750 - 3500 microns, 850 - 3000 microns, most preferably 1000 - 2500 microns.

Such inorganic aggregate **AG1** preferably have an apparent density of > 2.0 kg/dm³.

The inorganic aggregates in question may come from natural deposits, examples being river gravel, moraine gravel, etc., which customarily have an apparent density of 2.2-3 kg/dm³. Also possible, however, are recycled granules from old, crushed concrete, with an apparent density of around 2.4 kg/dm³.

Particularly preferred are inorganic aggregates **AG1** comprising silica sand or corundum, especially comprising silica sand.

The at 23°C solid thermoset is preferably selected from the list consisting of polyallyl diglycol carbonate, styrene acrylonitrile, cross linked polyvinyl chloride, cross linked urea formaldehyde and nylon, preferably polyallyl diglycol carbonate.

Preferably, the thermoset material of the aggregate **AG2** contains reactive sites that react with polyamines, polyalcohols and polybasic acids.

Is it further preferred if the aggregate **AG2** has a specific gravity (H₂O = 1) from 1.05 - 1.5, preferably 1.1 - 1.4, more preferably 1.2 - 1.3.

Is it also preferred if the aggregate **AG2** has a hardness (Rockwell, M-scale) from M70 - M120, preferably M95 - M110.

For example, suitable aggregate **AG2** are commercially available under the trade name ResNSand from R.J. MARSHALL COMPANY (MI, USA).

Preferably, the composition contains at least one organic solvent.

Such organic solvents are especially selected from the list consisting of esters of dicarboxylic acids, acetone, methyl ethyl ketone, methyl n-propyl ketone, diisobutyl ketone, methyl isobutyl ketone, methyl n-amyl ketone, methyl isoamyl ketone, acetylacetone, mesityl oxide, cyclohexanone, methylcyclohexanone, ethyl acetate, propyl acetate, butyl acetate, n-butyl propionate, diethyl malonate, 1-methoxy-2-propyl acetate, ethyl 3-ethoxypropionate, diisopropyl ether, diethyl ether, dibutyl ether, diethylene glycol diethyl ether, ethylene glycol diethyl ether, ethylene glycol monopropyl ether, ethylene glycol mono(2-ethylhexyl) ether, acetals such as, in particular, methylal, ethylal, propylal, butylal, 2-ethylhexylal, dioxolane, glycerol formal or 2,5,7,10-tetraoxaundecane (TOU), and toluene, xylene, heptane, octane, naphtha, white spirit, petroleum ether or petroleum spirit, especially Solvesso^{™} products (from Exxon), methylene chloride, propylene carbonate, butyrolactone, N-methylpyrrolidone and N-ethylpyrrolidone.

The proportion of solvents is preferably 0.5 - 10 % by weight, 1-5% by weight, in particular 2-3% by weight, based on the total weight of the composition.

This is advantageous for reasons of protection of the environment and health, since the compositions have low VOC emissions as a result. It has been found that, surprisingly, the present invention achieves a low viscosity without the solvents described above.

Preferably, the at least one organic solvent is at least one ester of dicarboxylic acids, preferably ester of aliphatic dicarboxylic acids, more preferably aliphatic dibasic acid esters, even more preferably selected from dimethyl glutarate, dimethyl adipate and dimethyl succinate, most preferably selected from dimethyl glutarate and dimethyl adipate.

Such ester of dicarboxylic acids are commercially available for example as aliphatic dibasic acid esters such as FlexaTrac^{™} DME-100 dimethyl ester, FlexaTrac^{™} DME-200 dimethyl ester or other commercially available esters from Ascend Performance Materials. This is advantageous with respect to a significant reduction in viscosity. This can be seen in the comparison of E3 with E2.

Preferably, the composition includes less than 5% by weight, less than 2% by weight, less than 1% by weight, less than 0.5% by weight, in particular less than 0.1% by weight, of fillers, based on the total weight of the composition.

More preferably, the composition is free of organic solvents other than the at least one ester of dicarboxylic acids.

Said fillers are especially selected from the group consisting of ground or precipitated calcium carbonates, optionally coated with fatty acids, especially stearates, barytes, quartz flours, quartz sands, dolomites, wollastonites, kaolins, calcined kaolins, sheet silicates, such as mica or talc, zeolites, aluminum hydroxides, magnesium hydroxides, silicas, including finely divided silicas from pyrolysis processes, cements, gypsums, fly ashes, industrially produced carbon blacks, graphite, metal powders, for example of aluminum, copper, iron, silver or steel, PVC powders and hollow beads.

The composition may further comprise additives selected from the list consisting of pigments, rheology modifiers and further additives.

Preferred pigments are inorganic or organic pigments, especially preferred titanium dioxide, chromium oxides or iron oxides. Preferred additives are selected from the group consisting of wetting agents; leveling agents; defoamers; deaerators; stabilizers; especially against oxidation, heat, light or UV radiation; and biocides.

The proportion of additives is preferably 2-12 % by weight, 3-9 % by weight, in particular 4-8% by weight, based on the total weight of the composition.

The ratio of isocyanate groups relative to the groups reactive with isocyanate groups, especially amino groups, is preferably in the range from 0.95 to 1.5, more preferably in the range from 1.0 to 1.4, more preferably in the range from 1.05 to 1.3, more preferably in the range from 1.1 to 1.25, especially preferably in the range from 1.15 to 1.25.

The composition immediately after the two components have been mixed, especially for 30 seconds at 2000 rpm, preferably has a viscosity of 2'000 to 10'000 mPas, in particular 3'000 to 6'000 mPas, preferably 3'000 to 5'500 mPas, measured for 30 seconds at 5 rpm with a No. 5 spindle, determined with a Brookfield viscometer at 23°C.

The first component **A** and the second component **B** of the composition are mutually separate components. The first component **A** and the second component **B** of the composition are produced separately from one another. The constituents of the respective component are mixed here with one another preferably with exclusion of moisture, so as to give a macroscopically homogeneous liquid. Each component is preferably stored in a separate moisture-tight container. A suitable container is in particular a drum, a bulk container, a hobbock, a pail, a can, a pouch, a canister or a bottle.

For the use of the composition, the two components are mixed with one another shortly before or during the application. The mixing ratio is preferably chosen such that the groups reactive toward isocyanates are present in a suitable ratio to the isocyanate groups, as described above. In parts by weight, the mixing ratio between the first component **A** and the second component **B** is typically in the range from about 1:1 to 1:5, especially 1:2 to 1:4.

The first component **A** and the second component **B** are mixed by means of a suitable stirring mechanism, such as a double-shaft mixer, for example, with the individual components suitably having been premixed in the correct mixing ratio. Likewise possible is continuous machine processing by means of a two-component metering unit with static or dynamic mixing of the components. In the mixing, it should be ensured that the two components are mixed with maximum homogeneity. If mixing precedes application, care must be taken to ensure that the time elapsing between mixing of the components and the application of the mixture is not too great, since if it is there may be disruptions, such as poor flow or retarded or incomplete development of the adhesion to the substrate, for example. Mixing takes place in particular at ambient temperature, which is typically in the range from about 5 to 50°C, preferably at about 10 to 35°C.

Curing by chemical reaction begins with the mixing of the first component **A** and the second component **B.** NCO-reactive groups available, especially amino groups, react here with isocyanate groups available. As a result of these reactions, the composition cures to give a solid material. This process is also referred to as crosslinking.

The present invention accordingly also describes a cured composition obtained from an aforementioned composition after the mixing of the first component **A** with the second component **B** and their curing.

In a further aspect, the invention also relates to the use of an above-described composition as a coating.

Suitable substrates for the composition, especially the floor coating and preferably, in particular, industrial-floor, bridge, and parking-deck coating, are in principle all substrates which are present in edifices. Examples of suitable substrates are concrete, cement screed, magnesia screed, ceramic tiles, asphalt, and any existing synthetic resin coatings.

This use may preferably involve use in a floor coating system, preferably consisting of:
- primer layer,
- at least one layer of the above-described composition,

To produce the floor coating system of the invention, preferably a primer layer is applied to the substrate, optionally after customary substrate pretreatment, such as grinding, sandblasting, shot blasting or caustic treatment with solvents or acids, for example.

For application, the freshly mixed composition is preferably applied as a layer to a planar or slightly inclined substrate, typically by being poured onto the substrate and then spread flatly to the desired layer thickness, using a roller, a spreader, a notched trowel or a spatula, for example.

Application takes place preferably within the open time of the composition. The "open time" or else "pot life" here refers to the time elapsing between the mixing of the components **A** and **B** and the end of a state of the composition in which it is suitable for working.

After the coating system has been applied, it is worked on preferably with a roll, especially a structured roll. A structured roll of this kind preferably has a roll width of 10-80 cm, especially 15-40 mm, and a roll diameter of 4-20 mm, especially 6-10 mm.

This working, especially rolling, using a roll, especially a structured roll, is preferably accomplished within the open time of the coating system. The working preferably takes place immediately after application of the coating system, preferably 5-20 min after application of the coating system.

Preferably a layer thickness in the range from 0.5 to 6 mm, 0.75 to 3 mm, especially 1 to 1.5 mm, is applied in one operation.

The coating system described is preferably applied as one layer.

Preferably, no additional layer (additional top coat or sealing layer) is applied on top of said layer.

In case the composition contains at least one aggregate **AG,** with preference no further aggregates are applied to/strewn into the coating system layer described, such as, for example, sand, gravel or other aforesaid aggregates, after the application of the layer of the coating system.

Particular preference is given to use in a floor coating system selected from the group consisting of floor coating systems for balconies, patios, squares, industrial floors, bridges, and parking decks, especially industrial floors, bridges, and parking decks, very preferably parking decks.

In a further aspect the invention also relates to a method for producing a coating with an above-described composition, wherein the method comprises the following method steps:
a) mixing the first component **A** with the second component **B,**
b) applying the resulting mixed composition to a substrate,
c) preferably working the applied composition, and
d) curing the applied composition.

The substrates mentioned are preferably a substrate as described above.

Additionally, in this method, preference is given to the production of coatings of the kind described above as preferred floor coatings.

The mixing of the first component **A** with the second component **B** takes place preferably:
- at temperatures in the range from -25 °C to 40°C, preferably -20 °C to 10°C, more preferably -15 °C to 0°C;
- within 1-10 min, especially within 2-6 min.

The application of the resulting mixed composition to a substrate preferably takes place at temperatures in the range from -25 °C to 40°C, preferably -20 °C to 10°C, more preferably -15 °C to 0°C.

The mixed composition obtained is applied preferably as described above for the use of the coating system, the application of the composition, working on the applied composition using a roller, especially structured roller, and also layer thickness. The embodiments specified above in this context as being preferred are also preferred for the method.

In case the composition contains at least one aggregate **AG,** it is especially preferred if after step c) no further aggregates are applied to/scattered into the described composition layer, such as, for example, sand, gravel or other aforementioned aggregates, after the application of the composition.

After step d) it is advantageous to apply no further layers, as stated above. It is further preferred if the substrate in step b) does not contain a primer layer, as stated above.

The composition of the invention preferably has the following properties:
**Viscosity,** measured for 30 seconds at 5 rpm with a No. 5 spindle, determined with a Brookfield viscometer at 23°C, immediately after mixing of the two components: 4'000 to 10'000 mPas, in particular 6'000 to 9'000 mPas, preferably 8'000 to 9'000 mPas;
**Gel time,** determined as described in the experimental section: more than 400 min, preferably more than 500 min, more preferably more than 600 min;
**Tensile strength,** determined as described in the experimental section: more than 1500 psi, preferably more than 1750 psi, more preferably more than 2000 psi;
**Elongation at break,** determined as described in the experimental section: 150 - 600%, preferably 200 - 500%;
**Crack bridging,** determined as described in the experimental section: "pass".

### Examples

Given below are working examples which are intended to further elucidate the invention described. Of course, the invention is not confined to these working examples described.

### 1. Commercial substances used:

| | |
|---|---|
| P1 | P1-1, Desmophen NH1423: amino-functional polyaspartic ester, amine value 202-208 mg KOH/g, equivalent weight 274, viscosity at 25°C 850-2.200 mPas to DIN 53 019 (from Bayer Materials Science) |
| P2 | Desmophen NH 2850 XP, mixture of amino-functional polyaspartic esters, amine value 190 mg KOH/g, equivalent weight 295, viscosity at 25°C 100 mPas to DIN 53 019 (from Bayer Materials Science) Solvent, FlexaTrac^{™} DME-200, mixture of dimethyl glutarate (72 - 76 wt.-%), dimethyl adipate (23 - 27 wt.-%) and dimethyl succinate (<1 wt.-%), Ascend |
| Sol | Performance Materials |
| Defoamer | Afcona 2290 |
| Dispersant | Tego Dispers 652 |
| HALS | Tinuvin 292 |
| Antioxidant | Univul 3035 |
| Thixotropy agent | Thixotropy agent |
| TiO₂ | TiO₂ |
| B1 | Desmodur N 3600: HDI-based aliphatic trimer, having a solid content of 100 wt%, an NCO equivalent of 183, an NCO content of 23.0 wt%, a HDI monomer content of less than 0.25 wt%, a viscosity of about 1200 mPa·s (23 °C), and an NCO functionality of 3.0-3.5, available from Covestro Co., Ltd. |
| B2 | Desmodur E 2863 XP: reaction product of an aliphatic polyester polyol and HDI with an NCO equivalent of 380, an NCO content of 11.1% by weight, an NCO functionality of about 2.0, an HDI monomer content of less than 0.3% by weight and a viscosity of about 1350 mPa ·s (23°C), available from Covestro Co., Ltd. |
| B3 | Reaction product of a polypropylene oxide-based triol (Mw: 3'000 g/mol), polypropylene oxide-based diol (Mw: 1'000 g/mol), 1,4 butanediol (crosslinker) and IPDI monomer, average molecular weight of polyurethane polymer 2250 g/mol, NCO content 4-6 % by weight. |
| Ultra 12 | ResNsand Ultra 12, aggregate of thermoset Polymer Resin (polyallyl diglycol carbonate), particle size 1190-1680 microns, specific gravity (H₂O = 1): 1.26, hardness (Rockwell, M-scale): M95 - M110, R.J. MARSHALL COMPANY (Ml, USA) |

### 2. Production of the compositions

For each composition, the ingredients specified in table 1 were processed in the specified amounts (in parts by weight) of the first component ("component A") to give a homogeneous liquid and stored. Subsequently, the amount of the second component specified in table 1 was added to the first component in an NCO/NH ratio of 1.2 and the two components were mixed in a Speedmixer at 2000 rpm for 30 seconds. The latter was tested immediately as follows:
**Viscosity** was measured at 23 °C for 30 seconds at 5 rpm with a No. 5 spindle, determined with a Brookfield viscometer DV1 at 23°C.
**Gel time** was measured at 23 °C at a stir speed of 20 rpm using a Shyodu Gel Timer, Model 100 using a 200 ml beaker containing approximately 150 ml of mixed components.

Mechanical properties were measured in the following manner:

| | |
|---|---|
| Tensile and Elongation: | ASTM D412 |
| Tear Strength: | ASTM D624 |

The samples (triple determination) are produced from cured films (curing for 14 days at 23°C) with dimensions of 25 mm × 100 mm × 0.2 mm, and the tensometer is used to calculate tensile strength and elongation at break. The measurements were conducted at 23°C and 50% relative air humidity.

Crack Bridging was measured according to ASTM C1305 modified within ASTM C957, "Pass" means no cracking, "Fail" means cracking.

Compositions **E1** to **E3** are inventive examples. Compositions **Ref.1** to **Ref.4** are comparative examples. The compositions **E1** to **E3** were applied directly after mixing to a concrete substrate.

The **workability at -10 °C** of the compositions E1 - E3 was determined after application of the mixed composition on a sandblasted concrete surface. The applied composition was applied at -10 °C outdoor temperature and evenly distributed with a foam roller. The applicability/workability was judged by an experienced applicator and judged by the ease of application by foam roller and found to be easily applicable.

The **curing at -10** °C of the compositions E1 - E3 was determined by using a circular drying time recorder (Ultracycle Circular Drying Time Recorder from Gardco, USA) using a 10mm diameter Teflon ball stylus that is dragged through the applied coating and determining the drying time in accordance with ASTM D5895 at a temperature of -10 °C. After storage for 12 hours at -10 °C the compositions had cured.

**Table 1, n.d. = not determined.**

| | **Ref.1** | **Ref.2** | **Ref.3** | **Ref.4** | **E1** | **E2** | **E3** |
|---|---|---|---|---|---|---|---|
| **Component B** | | | | | | | |
| B3 | 54 | 54 | | 36 | 36 | 36 | 33 |
| B1 | 18 | 18 | 72 | | 18 | 12 | 11.4 |
| B2 | | | | 36 | 18 | 24 | 22.6 |
| Dispersant | 0.8 | 0.8 | 0.8 | 0.8 | 0.8 | 0.8 | 0.8 |
| Antioxidant | 0.3 | 0.3 | 0.3 | 0.3 | 0.3 | 0.3 | 0.3 |
| Thixotropy agent | 0.5 | 0.5 | 0.5 | 0.5 | 0.5 | 0.5 | 0.5 |
| HALS | 1 | 1 | 1 | 1 | 1 | 1 | 1 |
| TiO₂ | 5 | 5 | 5 | 5 | 5 | 5 | 5 |
| Defoamer | 0.4 | 0.4 | 0.4 | 0.4 | 0.4 | 0.4 | 0.4 |
| Ultra 12 | 20 | 20 | 20 | 20 | 20 | 20 | 20 |
| **Total (weight-%)** | 100 | 100 | 100 | 100 | 100 | 100 | 95 |

| **Component A** | | | | | | | |
|---|---|---|---|---|---|---|---|
| P1 | 100 | | 100 | 100 | 100 | 100 | 90 |
| P2 | | 100 | | | | | |
| Sol | | | | | | | 10 |
| **Total (weight-%)** | 100 | 100 | 100 | 100 | 100 | 100 | 100 |
| | | | | | | | |
| Viscosity (cP) | 14,660 | n.d. | 8000 | 5752 | 5280 | 5440 | 3584 |
| Gel time (min) | 273 | 391 | 212 | 608 | 537 | 607 | 607 |
| Tensile (psi) | 2488 | 1365 | n.d. | n.d. | n.d. | 2400 | 1870 |
| Elongation (%) | 68 | 171 | n.d. | n.d. | n.d. | 207 | 171 |
| Tear Strength (lbf/in) | 385 | n.d. | n.d. | n.d. | n.d. | 305 | 274 |
| Crack bridging | n.d. | n.d. | n.d. | n.d. | pass | pass | pass |

## Claims

1. A composition comprising
a **first component** A comprising:
- at least one polyaspartic ester **P1** of the formula (I)
| | |
|---|---|
| 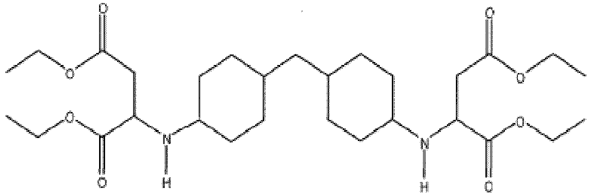 | (I) |
or formula (II)
| | |
|---|---|
| 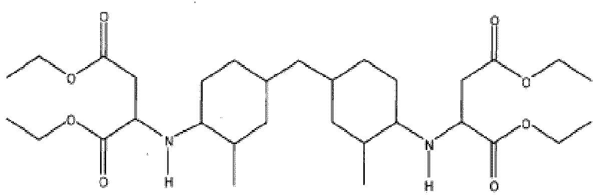 | (II) |
and a **second component B** comprising:
- at least one aliphatic polyisocyanate **B1**;
- at least one isocyanate prepolymer **B2**;
- at least one isocyanate-functional polyurethane polymer **B3**;
wherein :
- the weight ratio **B1/B2/B3** is in the range of 1-4 : 1-4 : 5.

2. The composition as claimed in claim 1, **characterized in that** the weight ratio **B1/B2/B3** is in the range of 2-3.5 : 1.5-3 : 5, preferably 3-3.5 : 1.5-2 : 5.

3. The composition as claimed in any of the preceding claims, **characterized in that** the polyaspartic ester **P1** has an equivalent weight of 220-300, preferably 250-300, more preferably 270-295.

4. The composition as claimed in any of the preceding claims, **characterized in that** the polyaspartic ester **P1** contains more than 95% by weight of the NCO-reactive groups, especially the amino groups, of the first component, based on the total weight of the first component.

5. The composition as claimed in any of the preceding claims, **characterized in that** the composition further comprises at least one ester of dicarboxylic acids, preferably ester of aliphatic dicarboxylic acids, more preferably aliphatic dibasic acid esters, even more preferably selected from dimethyl glutarate, dimethyl adipate and dimethyl succinate, most preferably selected from dimethyl glutarate and dimethyl adipate.

6. The composition as claimed in any of the preceding claims, **characterized in that** the composition further contains at least one aggregate **AG,** preferably selected from the group consisting of inorganic aggregates **AG1** and aggregates **AG2** of an at 23°C solid thermoset, preferably aggregates **AG2** of an at 23°C solid thermoset.

7. The composition as claimed in any of the preceding claims, **characterized in that** the aliphatic polyisocyanate **B1** is an oligomer, polymer or derivative derived from HDI or IPDI, especially HDI, preferably having an NCO content of 16% to 25% by weight, preferably 20% to 25% by weight.

8. The composition as claimed in any of the preceding claims, **characterized in that** the isocyanate prepolymer **B2** has an isocyanate group equivalent of 300 to 1100 and/or an isocyanate group (NCO) functionality of 1.9 to 4.5, preferably 1.9 to 3.5, more preferably 1.9 to 2.5.

9. The composition as claimed in any of the preceding claims, **characterized in that** the isocyanate-functional polyurethane polymer **B3** has an average molecular weight in the range from 1000 to 20 000 g/mol, more preferably in the range from 2000 to 10 000 g/mol.

10. The composition as claimed in any of the preceding claims, **characterized in that** the composition immediately after the two components have been mixed, especially for 30 seconds at 2000 rpm, has a viscosity of 2'000 to 10'000 mPas, in particular 3'000 to 6'000 mPas, preferably 3'000 to 5'500 mPas, measured for 30 seconds at 5 rpm with a No. 5 spindle, determined with a Brookfield viscometer at 23°C.

11. The composition as claimed in any of the preceding claims, **characterized in that** the ratio of isocyanate groups relative to the groups reactive with isocyanate groups, especially amino groups, is in the range from 0.95 to 1.5, more preferably in the range from 1.0 to 1.4, more preferably in the range from 1.05 to 1.3, more preferably in the range from 1.1 to 1.25, especially preferably in the range from 1.15 to 1.25.

12. The use of a composition as claimed in any of claims 1 to 11 as a coating.

13. The use as claimed in claim 12 in a floor coating system, consisting of
- primer layer,
- at least one layer of the composition as claimed in any of claims 1 to 11.

14. The use as claimed in claim 12 or 13 in industrial floors, bridges, and parking decks, more preferably parking decks.

15. A method for producing a coating with a composition as claimed in any of claims 1 to 11, the method comprising the following method steps:
a) mixing the first component **A** with the second component **B,**
b) applying the resulting mixed composition to a substrate,
c) preferably working the applied composition, and
d) curing the composition.
